# EUROPÄISCHE PATENTSCHRIFT

(11) **EP 2 534 399 B1**
(45) Veröffentlichungstag und Bekanntmachung des Hinweises auf die Patenterteilung: **28.05.2014**
(21) Anmeldenummer: 10773601.9
(22) Anmeldetag: 14.10.2010
(51) Int. Cl.: F16J 15/12, F01N 13/18

(54) **METALLISCHE DICHTUNG MIT NICHT ABGASBESTÄNDIGER EINLAGE**
METAL SEAL HAVING AN INSERT THAT IS NOT RESISTANT TO EXHAUST GAS
JOINT METALLIQUE COMPORTANT UN INSERT QUI NE RESISTE PAS AUX GAZ D'ECHAPPEMENT

(30) Priorität: 08.02.2010 DE 102010001660
(43) Veröffentlichungstag der Anmeldung: 19.12.2012
(73) Patentinhaber: Federal-Mogul Sealing Systems Gmbh, 57562 Herdorf (DE)
(72) Erfinder: GADOMSKI, Bartosz, 51399 Burscheid (DE); KLINNER, Manfred, 53844 Troisdorf (DE)
(74) Vertreter: Becker Kurig Straus
(86) Internationale Anmeldenummer: PCT/EP2010/065415
(87) Internationale Veröffentlichungsnummer: WO 2011/095236

(56) Entgegenhaltungen:
- EP-A1- 0 006 127
- EP-A1- 0 640 782
- EP-A2- 1 418 367
- DE-A1- 19 731 132
- JP-A- 8 247 293
- US-A- 4 756 561

## Beschreibung

Die vorliegende Erfindung betrifft eine Metalldichtung mit einer Einlage, die gegenüber Abgasen nicht beständig ist, insbesondere eine Abgasdichtung für zwei gegeneinander abzudichtende Bauteile des Abgasstrangs einer Verbrennungskraftmaschine.

Gattungsgemäße Metalldichtungen werden im Bereich des Abgasstrangs eingesetzt. Sie umfassen zwei metallische Lagen, die jeweils eine Dichtfläche zu den abzudichtenden Bauteilen bilden. Als thermische Barriere zwischen den Dichtflächen wird eine Faser- oder Weichstoffeinlage verwendet. Es ist dabei zu beachten, dass die Einlage nicht mit Abgasen in Kontakt kommt, da sie nicht abgasbeständig ist. Eine solche Dichtung ist bekannt aus z.B. EP 0 640 782. A1.

Dieses Dokument offenbart eine Dichtung zur Abdichtung zwischen zwei Bauteilen des Abgasstranges einer Verbrennungskraftmaschine, umfassend:
- eine obere federelastische Lage;
- eine untere federelastische Lage; und
- eine Einlage, die zwischen der oberen und der unteren Lage angeordnet ist; wobei
- die Dichtung mindestens eine Durchgangsöffnung aufweist;
- die obere und die untere Lage auf der Dichtfläche jeweils mindestens eine geprägte Sicke aufweisen, welche die mindestens eine Durchgangsöffnung umschließt;
- und wobei die obere und die untere Lage im an die Durchgangsöffhung angrenzenden Bereich formschlüssig miteinander verbunden sind.

Bei bekannten Dichtungen dieser Art wird im Bereich des Abgasdurchtrittes durch die Dichtung eine Metall-Lage der Dichtung umgelegt. Dadurch kommt es zu einer Überlappung der beiden Metall-Lagen, welche die Einlage vor Abgasen schützt. Die Erhöhung der Dicke der Dichtung im Bereich der Überlappung führt zu einer hohen lokalen Flächenpressung, wodurch die Dichtigkeit der Dichtung erreicht wird. Eine Folge der hohen Flächenpressung sind jedoch Verformungen an den Bauteilflanschen.

Es ist daher die Aufgabe der vorliegenden Erfindung, eine verbesserte Dichtung bereitzustellen, bei der die Dichtigkeit gewährleistet bleibt, ohne dabei Verformungen an den Bauteilflanschen zu verursachen. Weiterhin wird durch eine erfindungsgemäß vorgeschlagene Dichtung der Schutz der Einlage vor Abgasen sichergestellt.

Gemäß einem ersten Aspekt der Erfindung wird eine Dichtung zur Abdichtung zwischen zwei Bauteilen des Abgasstranges einer Verbrennungskraftmaschine bereitgestellt, umfassend die Merkmale des Anspruchs 1.

Um die hohen lokalen Flächenpressungen herkömmlicher Dichtungen zu vermeiden, werden Sicken in die Stahllagen der Dichtung geprägt. Diese übernehmen die Dichtleistung anstelle einer lokalen Erhöhung der Dicke durch Umlegen von Metall-Lagen. Aufgrund der nötigen federelastischen Eigenschaften der Sicken ist für die Metall-Lagen ein Werkstoff mit adäquaten federelastischen Eigenschaften zu wählen, beispielsweise Federstahl.

Durch diese Eigenschaften der Metall-Lagen ist allerdings eine Umlegung im Bereich des Gaskanals nur bedingt möglich, da diese nicht sicher ihre Form behalten würde. Daher sind andere Maßnahmen zum Schutz der Einlage nötig. Erfindungsgemäß wird daher vorgeschlagen, an der Abgasseite der Dichtung eine fonn- oder werkstoffschlüssige Verbindung zwischen der oberen und der unteren Metall-Lage zu realisieren.

Die Einlage wird dadurch vor der Einwirkung von Abgasen geschützt, während die Sicken auf den Dichtflächen der Dichtung eine verbesserte Abdichtwirkung erreichen, ohne dabei die Bauteilflansche zu verformen. Da die Sicken elastischer sind als die herkömmlichen Verdickungen durch Umlegen, kann auch von einer höheren Dauerhaltbarkeit der Dichtung ausgegangen werden. Kleine Lageänderungen der Bauteilflansche zueinander können besser ausgeglichen werden.

Gemäß der Erfindung sind die obere und die untere Metall-Lage in dem an die Durchgangsöffnung angrenzenden Bereich miteinander verschweißt. Das Verschweißen erfolgt durch Punktverschweißen oder durch kontinuierliches Verschweißen.

Erfindungsgemäß sind die obere und die untere Metall-Lage im von der Durchgangsöffnung abgewandten Randbereich formschlüssig miteinander verbunden.

Gemäß einer Ausführungsform umfasst die Einlage eine Weichstofflage oder eine Fasereinlage.

Erfindungsgemäß umfassen die obere und die untere Metall-Lage Federstahl-Lagen.

Gemäß einer Ausführungsform weisen die obere und die untere Metall-Lage jeweils zwei Sicken auf.

Gemäß einer Ausführungsform sind die Sicken in der oberen und der unteren Metall-Lage Vollsicken oder Halbsicken.

Gemäß einer Ausführungsform weist die mindestens eine Sicke in der oberen Metall-Lage in die gleiche Richtung wie die mindestens eine Sicke in der unteren Metall-Lage. In einer alternativen Ausführungsform weist die mindestens eine Sicke in der oberen Metall-Lage in die andere Richtung wie die mindestens eine Sicke in der unteren Metall-Lage.

Gemäß einer Ausführungsform umfasst die Dichtung zwischen der Einlage und der oberen oder der unteren Metall-Lage eine Metall-Zwischenlage.

Gemäß einer Ausführungsform weist die Metall-Zwischenlage die gleiche Zahl und Art von Sicken auf wie die angrenzende obere bzw. untere Metall-Lage, und die Anordnung der Sicke(n) der Metall-Zwischenlage ist spiegelbildlich bezüglich der angrenzenden oberen bzw. unteren Metall-Lage.

### Kurze Beschreibung der Zeichnung

- Fig. 1: zeigt einen Profilquerschnitt einer ersten Ausführungsform der erfindungsgemäßen Dichtung;
- Fig. 2: zeigt einen Profilquerschnitt einer zweiten Ausführungsform der erfindungsgemäßen Dichtung;
- Fig. 3: zeigt einen Profilquerschnitt einer dritten Ausführungsform der erfindungsgemäßen Dichtung; und
- Fig. 4: zeigt einen Profilquerschnitt einer vierten Ausführungsform der erfindungsgemäßen Dichtung.

In den Figuren wird nicht gezeigt, das die obere und die untere Metall-Lage erfindungsgemäß im von der Durchgangsöffnung abgewandten Randbereich formschlüssig miteinander verbunden sind.

Hier und in der folgenden Beschreibung ist jeweils nur ein Profilquerschnitt der Dichtung gezeigt, wobei sich die Abgasseite der Dichtung jeweils auf der rechten Seite der Figur befindet. Der Außenrand der Dichtung befindet sich jeweils auf der linken Seite der Figur. Der Profilquerschnitt der gesamten Dichtung umgibt geschlossen die mindestens eine Durchgangsöffnung. Die Dichtflächen zur Anlage an den Flanschen der abzudichtenden Bauteile (jeweils nicht gezeigt) liegen hier und im Folgenden oben und unten in der Figur.

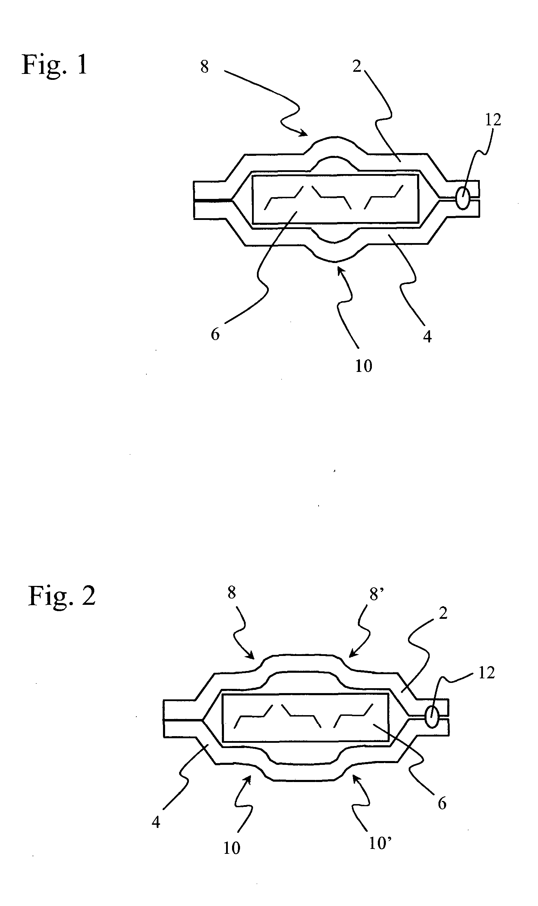

In Figur 1 ist eine erste Ausführungsform der erfindungsgemäßen Dichtung gezeigt. Sie umfasst eine erste bzw. obere Metall-Lage 2, eine zweite bzw. untere Metall-Lage 4, und eine Einlage 6, die zwischen der oberen und unteren Metall-Lage 2, 4 angeordnet ist. Die obere Metall-Lage 2 weist eine Sicke 8 auf der Dichtfläche auf, die in dieser Ausführungsform eine Vollsicke ist. Die untere Metall-Lage 4 weist analog eine Vollsicke 10 auf ihrer Dichtfläche auf.

Die Einlage 6, die etwa eine Weichstofflage oder Fasereinlage sein kann, befindet sich zwischen der oberen und unteren Metall-Lage 2, 4. Um die Einlage 6 vor der Einwirkung von Abgasen zu schützen, sind die obere und die untere Metall-Lage 2, 4 auf der Abgasseite durch eine Schweißverbindung 12 miteinander verbunden.

In Figur 2 ist eine zweite Ausführungsform der erfindungsgemäßen Dichtung gezeigt. Sie weist im Wesentlichen die gleichen Elemente wie die Dichtung von Figur 1 auf, wobei in der hier gezeigten Ausführungsform die einzelnen Vollsicken auf den Dichtflächen der oberen und der unteren Metall-Lage 2, 4 durch jeweils zwei Halbsicken 8, 8' bzw. 10, 10' ersetzt sind. Dadurch wird eine verbreiterte Dichtzone erreicht, wodurch die Dichtwirkung verbessert werden kann. In der gezeigten Ausführungsform ist die Dichtlinie im Wesentlichen mittig angeordnet.

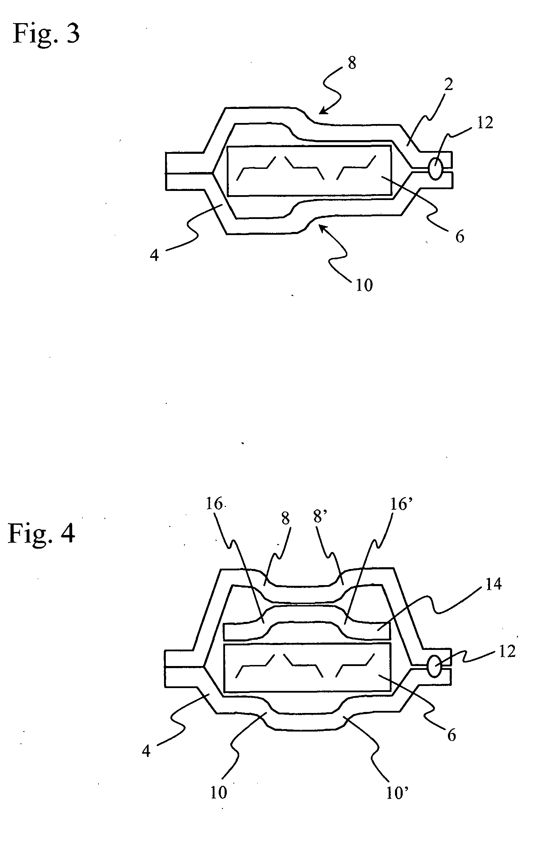

In Figur 3 ist eine dritte Ausführungsform der erfindungsgemäßen Dichtung gezeigt. Sie weist im Wesentlichen die gleichen Elemente wie die Dichtung von Figur 1 auf, wobei in der hier gezeigten Ausführungsform die einzelnen Vollsicken auf den Dichtflächen der oberen und der unteren Metall-Lage 2, 4 durch jeweils eine einzelne Halbsicke 8 bzw. 10 ersetzt sind. Ähnlich der Ausführungsform von Figur 2 wird hiermit eine verbreiterte Dichtzone erreicht, wobei diese im Vergleich zu Figur 2 nicht mittig angeordnet ist, sondern in Richtung des Außenrandes der Dichtung verschoben ist. In alternativen Ausführungsformen (nicht gezeigt) kann die von den jeweiligen Halbsicken gebildete breite Dichtzone stattdessen auch in Richtung der Abgasseite der Dichtung verschoben sein.

In Figur 4 ist eine dritte Ausführungsform der erfindungsgemäßen Dichtung gezeigt. Sie weist im Wesentlichen die gleichen Elemente wie die Dichtung von Figur 2 auf, wobei hier die Anordnung der Metall-Lagen 2, 4 nicht spiegelbildlich wie bei den Ausführungsformen von Figur 1-3 ist, sondern gleich. Mit anderen Worten, die Sicken in den Metall-Lagen 2, 4 weisen hier nicht wie bei Figur 1-3 in entgegengesetzte Richtungen, sondern in die gleiche. Durch die Anordnung werden statt der einen breiten Dichtzone zwei breite Dichtzonen jeweils in Richtung des äußeren bzw. abgasseitigen Randes der Dichtung erzeugt.

Zusätzlich ist in dieser Ausführungsform eine Metall-Zwischenlage 14 zwischen der oberen Metall-Lage 2 und der Einlage 6 angeordnet (in nicht gezeigten alternativen Ausführungsformen kann die Metall-Zwischenlage 14 auch zwischen der unteren Metall-Lage 4 und der Einlage 6 angeordnet sein). Gegenüber der Metall-Lage 2 weist die Metall-Zwischenlage 14 die gleiche Art und Anzahl an Sicken (hier zwei Halbsicken 16, 16') auf. Die Anordnung der Sicken 16, 16' ist spiegelbildlich zu den Sicken 8, 8' in der Metall-Lage 2.

Durch diese Anordnung wird die Einlage 6 an ihren Rändern weiterhin sicher zwischen Metall-Zwischenlage 14 und Metall-Lage 4 gehalten. Einerseits kann die Metall-Lage 2 bei ungleichförmiger Belastung geringfügig über die mittlere Kontaktfläche zwischen Metall-Lage 2 und Metall-Zwischenlage 14 abrollen. Andererseits können Druckbelastungen auf der oberen Dichtfläche leichter durch die ebenfalls federnde Metall-Zwischenlage 14 weitergegeben werden. Die Metall-Zwischenlage 14 erhöht somit die Elastizität und Anpassbarkeit der oberen Dichtfläche der Dichtung.

Bei erfindungsgemäßen Dichtungen ist es bevorzugt, dass die Sicke(n) jeweils übereinander angeordnet sind, wie in den Ausführungsformen von Figur 1-3. Alternativ ist bevorzugt, dass die Anordnung der Sicke(n) in oberer und unterer Metall-Lage zumindest auf die Mitte der Dichtung bezogen symmetrisch ist (wie in der Ausführungsform von Figur 4), um ein Verkippen des Profils der Dichtung zu verhindern.

Kombinationen der gezeigten Arten, Anzahlen und Anordnungen der Sicken in oberer und unterer Metall-Lage sind erfindungsgemäß möglich. Dabei sind Art, Anzahl und Anordnung der Sicke(n) in den jeweiligen Metall-Lagen auch unabhängig voneinander möglich. Beispielsweise kann/können in der oberen Metall-Lage (eine) Halbsicke(n) vorgesehen sein, und in der unteren (eine) Vollsicke(n), und umgekehrt.

Mit Dichtungen gemäß der vorliegenden Erfindung wird die Dichtigkeit sichergestellt, wobei die Verformung von Bauteilflanschen nicht auftritt oder zumindest deutlich reduziert wird. Die Einlage wird sicher vor den Einwirkungen von Abgas geschützt.

## Patentansprüche

1. Dichtung zur Abdichtung zwischen zwei Bauteilen des Abgasstranges einer Verbrennungskraftmaschine, umfassend:
- eine obere federelastische Federstahl-Lage (2);
- eine untere federelastische Federstahl-Lage (4); und
- eine Einlage (6), die zwischen der oberen und der unteren Federstahl-Lage (2, 4) angeordnet ist; wobei
- die Dichtung mindestens eine Durchgangsöffnung aufweist;
- die obere und die untere Federstahl-Lage (2, 4) auf der Dichtfläche jeweils mindestens eine geprägte Sicke (8, 10) aufweisen, welche die mindestens eine Durchgangsöffnung umschließt; und
- die obere und die untere Federstahl-Lage (2, 4) in dem an die mindestens eine Durchgangsöffnung angrenzenden Bereich miteinander verschweißt sind, wobei die Verschweißung (12) eine kontinuierliche oder eine Punktverschweißung umfasst, und wobei die obere und die untere Federstahl-Lage (2, 4) im von der Durchgangsöffnung abgewandten Randbereich formschlüssig miteinander verbunden sind.

2. Dichtung nach Anspruch 1, wobei die Einlage (6) eine Weichstofflage oder eine Fasereinlage umfasst.

3. Dichtung nach einem der Ansprüche 1 oder 2, wobei die obere und die untere Federstahl-Lage (2, 4) jeweils zwei Sicken (8, 8', 10, 10') aufweisen.

4. Dichtung nach einem der Ansprüche 1 bis 3, wobei die Sicken (8, 10) in der oberen und der unteren Federstahl-Lage (2, 4) Vollsicken sind.

5. Dichtung nach einem der Ansprüche 1 bis 3, wobei die Sicken (8, 10) in der oberen und der unteren Federstahl-Lage (2, 4) Halbsicken sind.

6. Dichtung nach einem der Ansprüche 1 bis 4, wobei die mindestens eine Sicke (8) in der oberen Federstahl-Lage (2) in die gleiche Richtung weist wie die mindestens eine Sicke (10) in der unteren Federstahl-Lage (4).

7. Dichtung nach einem der Ansprüche 1 bis 5, wobei die mindestens eine Sicke (8) in der oberen Federstahl-Lage (2) in die andere Richtung weist wie die mindestens eine Sicke (10) in der unteren Federstahl-Lage (4).

8. Dichtung nach einem der Ansprüche 1 bis 7, wobei die Dichtung zwischen der Einlage (6) und der oberen oder der unteren Federstahl-Lage (2, 4) eine Metall-Zwischenlage (14) umfasst.

9. Dichtung nach Anspruch 8, wobei die Federstahl-Zwischenlage (14) die gleiche Zahl und Art von Sicken aufweist wie die angrenzende obere bzw. untere Federstahl-Lage (2, 4), wobei die Anordnung der Sicke(n) der Federstahl-Zwischenlage (14) spiegelbildlich bezüglich der angrenzenden oberen bzw. unteren Federstahl-Lage (2, 4) ist.

## Claims

1. Gasket for sealing between two components of the exhaust line of a combustion engine, comprising:
- an upper spring-elastic spring steel layer (2);
- a lower spring-elastic spring steel layer (4); and
- an insert (6), which is arranged between the upper and the lower spring steel layer (2, 4); wherein
- the gasket comprises at least one through-opening;
- the upper and the lower spring steel layer (2, 4) on the sealing surface each have at least one stamped bead (8, 10), which encloses the at least one through-opening; and
- the upper and the lower spring steel layer (2, 4) are welded together in the region adjoining the at least one through-opening, wherein the weld (12) comprises a continuous or a spot weld, and wherein the upper and the lower spring steel layer (2, 4) are positively interconnected in the edge region facing away from the through-opening.

2. The gasket according to Claim 1, wherein the insert (6) comprises a soft material layer of a fibre insert.

3. The gasket according to any one of the Claims 1 or 2, wherein the upper and the lower spring steel layer (2, 4) each comprise two beads (8, 8', 10, 10').

4. The gasket according to any one of the Claims 1 to 3, wherein the beads (8, 10) in the upper and the lower spring steel layer (2, 4) are full beads.

5. The gasket according to any one of the Claims 1 to 3, wherein the beads (8, 10) in the upper and the lower spring steel layer (2, 4) are half beads.

6. The gasket according to any one of the Claims 1 to 4, wherein the at least one bead (8) in the upper spring steel layer (2) points in the same direction as the at least one bead (10) in the lower spring steel layer (4).

7. The gasket according to any one of the Claims 1 to 5, wherein the at least one bead (8) in the upper spring steel layer (2) points in the other direction to that of the at least one bead (10) in the lower spring steel layer (4).

8. The gasket according to any one of the Claims 1 to 7, wherein the gasket between the insert (6) and the upper or the lower spring steel layer (2, 4) comprises a metal intermediate layer (14).

9. The gasket according to Claim 8, wherein the spring steel intermediate layer (14) has the same number and type of beads as the adjoining upper and lower spring steel layer (2, 4), wherein the arrangement of the bead(s) of the spring steel intermediate layer (14) is in mirror image relative to the adjoining upper and lower spring steel layer (2, 4).

## Revendications

1. Joint d'étanchéité pour isoler de manière étanche entre deux composants de la colonne de gaz d'échappement d'un moteur à combustion interne, comprenant :
- une couche supérieure d'acier à ressort (2) élastique ;
- une couche inférieure (4) d'acier à ressort élastique ; et
- un insert (6), qui est disposé entre les couches d'acier à ressort supérieure et inférieure (2, 4) ; dans lequel
- le joint d'étanchéité présente au moins une ouverture traversante ;
- les couches d'acier à ressort supérieure et inférieure (2, 4) présentent sur la surface d'étanchéité respectivement au moins une moulure marquée (8, 10), qui enveloppe au moins une ouverture traversante ; et
- les couches d'acier à ressort supérieure et inférieure (2, 4) sont soudées l'une à l'autre dans la zone contiguë à au moins une ouverture traversante, dans lequel la soudure (12) comprendre une soudure par points ou continue, et dans lequel la couche d'acier à ressort supérieure et inférieure (2, 4) sont reliées l'une à l'autre par conjonction de forme par la zone de bord qui se détourne de l'ouverture traversante.

2. Joint d'étanchéité selon la revendication 1, dans lequel l'insert (6) comprend une couche en matériau tendre ou un insert en fibres.

3. Joint d'étanchéité selon une des revendications 1 ou 2, dans lequel les couches supérieure et inférieure d'acier à ressort (2, 4) présentent respectivement deux moulures (8, 8', 10, 10').

4. Joint d'étanchéité selon une des revendications 1 à 3, dans lequel les moulures (8, 10) sont des moulures complètes dans la couche supérieure et inférieure (2, 4) d'acier à ressort.

5. Joint d'étanchéité selon une des revendications 1 à 3, dans lequel les moulures (8, 10) sont des demi-moulures dans la couche supérieure et inférieure d'acier à ressort (2, 4).

6. Joint d'étanchéité selon une des revendications 1 à 4, dans lequel au moins une moulure (8) dans la couche supérieure d'acier à ressort (2) est orientée dans la même direction que au moins une moulure (10) dans la couche inférieure d'acier à ressort (4).

7. Joint d'étanchéité selon une des revendications 1 à 4, dans lequel au moins une moulure (8) dans la couche supérieure d'acier à ressort (2) est orientée dans une autre direction que au moins une moulure (10) dans la couche inférieure d'acier à ressort (4).

8. Joint d'étanchéité selon une des revendications 1 à 7, dans lequel le joint d'étanchéité entre l'insert (6) et la couche supérieure ou supérieure d'acier à ressort (2, 4) comprend une couche intermédiaire en métal (14).

9. Joint d'étanchéité selon la revendication 8, dans lequel la couche intermédiaire d'acier à ressort (14) présente le même nombre et type de moulures que la couche contiguë, supérieure ou inférieure d'acier à ressort (2, 4), dans lequel la dispositif de la(des) moulure(s) de la couche intermédiaire d'acier à ressort (14) est symétrique par rapport à la couche contiguë, supérieure ou inférieure d'acier à ressort (2, 4).
